(19) **Europäisches Patentamt**
**European Patent Office**
**Office européen des brevets**

(11) **EP 3 193 556 A1**

(12) **EUROPEAN PATENT APPLICATION**
published in accordance with Art. 153(4) EPC

(43) Date of publication:
**19.07.2017 Bulletin 2017/29**

(51) Int Cl.:
**H04W 74/08** *(2009.01)* **H04W 72/02** *(2009.01)*

(21) Application number: **15840356.8**

(22) Date of filing: **19.03.2015**

(86) International application number:
**PCT/CN2015/074636**

(87) International publication number:
**WO 2016/037478 (17.03.2016 Gazette 2016/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **09.09.2014 CN 201410456513**

(71) Applicant: **ZTE Corporation**
**Shenzhen, Guangdong 518057 (CN)**

(72) Inventors:
 • **ZHANG, Wen**
 **Shenzhen**
 **Guangdong 518057 (CN)**
 • **XIA, Shuqiang**
 **Shenzhen**
 **Guangdong 518057 (CN)**
 • **DAI, Bo**
 **Shenzhen**
 **Guangdong 518057 (CN)**
 • **LIU, Kun**
 **Shenzhen**
 **Guangdong 518057 (CN)**

 • **FANG, Huiying**
 **Shenzhen**
 **Guangdong 518057 (CN)**
 • **LI, Xincai**
 **Shenzhen**
 **Guangdong 518057 (CN)**
 • **DAI, Qian**
 **Shenzhen**
 **Guangdong 518057 (CN)**
 • **LU, Zhaohua**
 **Shenzhen**
 **Guangdong 518057 (CN)**
 • **AI, Jianxun**
 **Shenzhen**
 **Guangdong 518057 (CN)**
 • **SHI, Jing**
 **Shenzhen**
 **Guangdong 518057 (CN)**
 • **LI, Shupeng**
 **Shenzhen**
 **Guangdong 518057 (CN)**

(74) Representative: **Deambrogi, Edgardo et al**
**Jacobacci & Partners S.p.A.**
**Corso Emilia 8**
**10152 Torino (IT)**

(54) **ACCESS METHOD AND APPARATUS FOR USER EQUIPMENT**

(57)    An access method and device for User Equipment (UE) are provided. The method includes: a Physical Random Access Channel (PRACH) resource is selected according to a preset manner, and the PRACH resource is one of: a preamble resource, a preamble resource and one or more access time, a preamble resource and one or more frequency-domain resources, and a preamble and one or more time-frequency resources; and an access is performed by adopting the PRACH resource. By virtue of the technical solutions provided by the present disclosure, an access delay of the UE is effectively reduced, the requirements for resources are reduced, and meanwhile, the probability of collision is lowered.

EP 3 193 556 A1

A PRACH resource is selected according to a preset manner, wherein the PRACH resource is one of: a preamble resource, a preamble resource and one or more access time, a preamble resource and one or more frequency-domain resources, and a preamble and one or more time-frequency resources

S102

An access is performed by adopting the PRACH resource

S104

**Fig. 1**

**Description**

**Technical Field**

The present disclosure relates to the field of communications, and more particularly to an access method and device for UE.

**Background**

At present, Machine Type Communication (MTC) UE, also called as Machine to Machine (M2M) UE, is a main application form of the Internet of things.

In recent years, due to high spectral efficiency of a Long-Term Evolution/Long-Term Evolution Advance (LTE/LTE-A) system, more and more mobile operator select LTE/LTE-A as an evolution direction of broadband wireless communication systems. Multiple types of MTC data services based on the LTE/LTE-A may also be more attractive.

Future massive machine equipment communication requires that the concurrent transmission blocking rate of a random access is smaller than 0.1 percent and an access density of every square meter within 1s~10s is not lower than 10 pieces of UE. That is, at least tens of thousands of users are required to access a microcell within 1s~10s. In order to meet such a requirement, at least a hundred times of Physical Random Access Channel (PRACH) resources are required even under the condition of uniform access of the UE and adoption of a PRACH configuration index #14 (each subframe may initiate random access) according to an existing random access manner. More resources may be required under a practical condition of non-uniform access. In existing LTE systems, for a system with a 20M bandwidth, if a time-frequency resource may accommodate 64 cyclic shifts of a preamble root sequence, the bandwidth is insufficient even though being completely configured to send PRACHs.

Thus it can be seen that there is no solution applicable to massive UE access in a related technology.

**Summary**

Embodiments of the present disclosure provide an access method and device for UE, so as to at least solve the problem that there is no solution applicable to massive UE access in the related technology.

According to an aspect of the embodiments of the present disclosure, an access method for UE is provided.

The access method for the UE according to the embodiments of the present disclosure may include that: a PRACH resource is selected according to a preset manner, and the PRACH resource may be one of: a preamble resource, the preamble resource and one or more access time, the preamble resource and one or more frequency-domain resources, and the preamble and one or more time-frequency resources; and access is performed by adopting the PRACH resource.

In an exemplary embodiment, that the PRACH resource is selected according to the preset manner may include at least one of following: the PRACH resource is calculated according to identification information of the UE; and the PRACH resource allocated by network-side equipment to the UE is selected.

In an exemplary embodiment, the PRACH resource allocated by the network-side equipment to the UE may be selected according to Radio Resource Control (RRC) signaling or physical-layer signaling received from the network-side equipment.

In an exemplary embodiment, before the RPACH resource is selected according to the preset manner, the method may further include that: a notification message sent by the network-side equipment is received, and the notification message indicates at least one of: an available preamble resource of a local cell, an available time-domain resource of the local cell, an available frequency-domain resource of the local cell and a time-domain resource period of the local cell.

In an exemplary embodiment, before the PRACH resource is selected according to the preset manner, the method may further include that: a resource information set in a predefined bundling manner is acquired, and the resource information set may include at least one of: an available preamble resource of a local cell, an available time-domain resource of the local cell, an available frequency-domain resource of the local cell and a time-domain resource period of the local cell.

In an exemplary embodiment, under the condition that the network-side equipment is an Evolved NodeB (eNB) and multiple available preamble root sequences exist in a cell where the eNB is located, each available preamble root sequence may be bound with different subframes respectively.

In an exemplary embodiment, a bundling manner for each available preamble root sequence and different subframes may change according to a preset pattern.

In an exemplary embodiment, the access time may change according to the preset pattern.

In an exemplary embodiment, after the PRACH resource is obtained by calculating the identification information, the method may further include that: if a conflict occurs in a process of performing access over the PRACH resource, it is determined that access is continued to be performed according to the calculated PRACH resource, or, it is determined that random access is performed on another time-frequency resource divided by the network-side equipment, and the other divided time-frequency resource may be notified by the network-side equipment or predefined.

In an exemplary embodiment, the method may further include that: under the condition that access is completed after multiple access failures, an access condition is reported to the network-side equipment, and the access condition may be configured for the network-side equipment to allocate a dedicated PRACH resource to the UE.

In an exemplary embodiment, that the PRACH resource is obtained by calculating the identification information may include that: a PRACH resource set is selected, and the PRACH resource is calculated in the PRACH resource set according to the identification information.

In an exemplary embodiment, that access is performed by adopting the PRACH resource may include one of following: after an available preamble number is obtained by calculating the identification information, random access is performed by adopting a preamble resource corresponding to the available preamble number; after the available preamble number and the one or more access time are obtained by calculating the identification information, random access is performed at the one or more access time by adopting the preamble resource corresponding to the available preamble number; after the available preamble number and the one or more frequency-domain resources are obtained by calculating the identification information, random access is performed over the one or more frequency-domain resources by adopting the preamble resource corresponding to the available preamble number; after the available preamble number and one or more time-domain resources are obtained by calculating the identification information, random access is performed over the one or more time-domain resources by adopting the preamble resource corresponding to the available preamble number; and random access is performed by adopting the PRACH resource allocated by the network-side equipment to the UE.

According to the other aspect of the embodiments of the present disclosure, an access device for UE is provided.

The access device for the UE according to the embodiments of the present disclosure may include: a selection module, configured to select a PRACH resource according to a preset manner, and the PRACH resource may be one of: a preamble resource, the preamble resource and one or more access time, the preamble resource and one or more frequency-domain resources, and the preamble and one or more time-frequency resources; and an access module, configured to perform access by adopting the PRACH resource.

In an exemplary embodiment, the selection module may include: a calculation unit, configured to calculate the PRACH resource according to identification information of the UE; and a selection unit, configured to select the PRACH resource allocated by network-side equipment to the UE.

In an exemplary embodiment, the selection unit may be configured to select the PRACH resource allocated by the network-side equipment to the UE according to RRC signaling or physical-layer signaling received from the network-side equipment.

In an exemplary embodiment, the device may further include: a receiving module, configured to receive a notification message sent by the network-side equipment, and the notification message may be configured to indicates at least one of: an available preamble resource of a local cell, an available time-domain resource of the local cell, an available frequency-domain resource of the local cell and a time-domain resource period of the local cell.

In an exemplary embodiment, the device may further include: an acquisition module, configured to acquire a resource information set in a predefined bundling manner, and the resource information set may include at least one of: an available preamble resource of a local cell, an available time-domain resource of the local cell, an available frequency-domain resource of the local cell and a time-domain resource period of the local cell.

In an exemplary embodiment, the calculation unit may be configured to, under the condition that the network-side equipment is an eNB and multiple available preamble root sequences exist in a cell where the eNB is located, bundling each available preamble root sequence with different subframes respectively.

In an exemplary embodiment, a bundling manner for each available preamble root sequence and different subframes may change according to a preset pattern.

In an exemplary embodiment, the access time may change according to the preset pattern.

In an exemplary embodiment, the access module may be configured to, if a conflict occurs in a process of performing access over the PRACH resource, determine to continue performing access over the PRACH resource obtained by calculation, or, determine to perform random access on another time-frequency resource divided by the network-side equipment, and the other divided time-frequency resource may be notified by the network-side equipment or predefined.

In an exemplary embodiment, the device may further include: a reporting module, configured to, under the condition that access is completed after multiple access failures, report an access condition to the network-side equipment, and the access condition may be configured for the network-side equipment to allocate a dedicated PRACH resource to the UE.

In an exemplary embodiment, the calculation unit may be configured to select a PRACH resource set, and calculate the PRACH resource in the PRACH resource set according to the identification information.

In an exemplary embodiment, the access module may be configured to perform access by adopting the PRACH resource, including one of following: after an available preamble number is obtained by calculating the identification information, random access is performed by adopting a preamble resource corresponding to the available preamble number; after the available preamble number and the one or more access time are obtained by calculating the identification information, random access is performed at the one or more access time by adopting the preamble resource corresponding to the available preamble number; after the available preamble number and the one or more frequency-domain resources are obtained by calculating the identification information, random access is performed over the one or more frequency-domain resources by adopting the preamble resource corresponding to the available preamble number; after the available preamble number and one or more time-domain resources are obtained by calculating the identification information, random access is performed over the one or more time-domain resources by adopting the preamble resource corresponding to the available preamble number; and random access is performed by adopting the PRACH resource allocated by the network-side equipment to the UE.

According to the embodiments of the present disclosure, the PRACH resource is selected according to the preset manner, and the PRACH resource is one of: the preamble resource, the preamble resource and the one or more access time, the preamble resource and the one or more frequency-domain resources, and the preamble and the one or more time-frequency resources; and access is performed by adopting the PRACH resource. The problem that there is no solution applicable to massive UE access in the related technology is solved, an access delay of the UE is further effectively reduced, the requirements for resources are reduced, and meanwhile, the probability of collision is lowered.

**Brief Description of the Drawings**

The drawings described here are adopted to provide a further understanding to the present disclosure, and form a part of the present disclosure.

Fig. 1 is a flowchart of an access method for UE according to an embodiment of the present disclosure;

Fig. 2 is a schematic diagram of classified access of UE according to a preferred embodiment of the present disclosure;

Fig. 3 is a structure block diagram of an access device for UE according to an embodiment of the present disclosure; and

Fig. 4 is a structure block diagram of an access device for UE according to a preferred embodiment of the present disclosure.

**Detailed Description of the Embodiments**

The present disclosure will be described below with reference to the drawings and embodiments in detail. It is important to note that the embodiments in the present disclosure and characteristics in the embodiments may be combined under the condition of no conflicts.

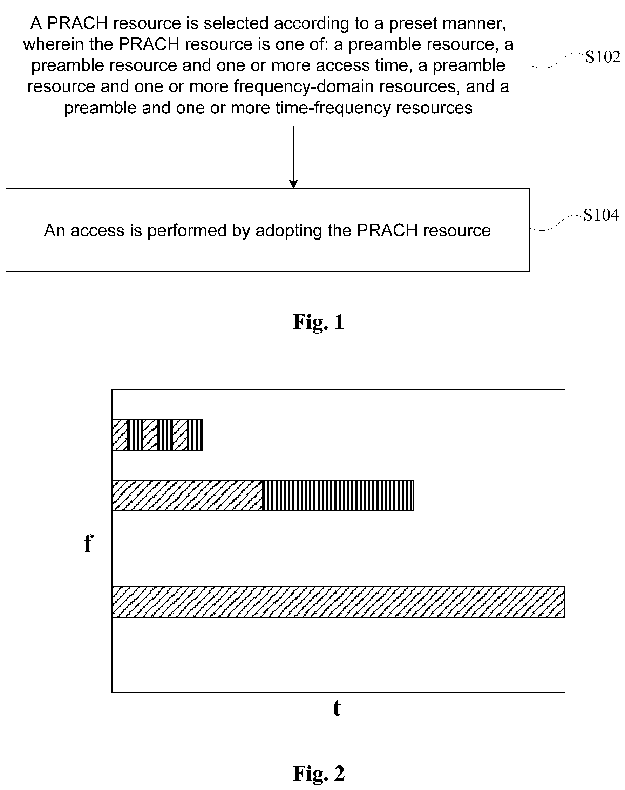

Fig. 1 is a flowchart of an access method for UE according to an embodiment of the present disclosure. As shown in Fig. 1, the method may include the following processing steps S102 to S104.

At Step S102: a PRACH resource is selected according to a preset manner, and the PRACH resource is one of: a preamble resource, the preamble resource and one or more access time, the preamble resource and one or more frequency-domain resources, and the preamble and one or more time-frequency resources.

At Step S104: access is performed by adopting the PRACH resource.

There is no solution applicable to massive UE access in the related technology. By adopting the method shown in Fig. 1, one resource in the preamble resource, the preamble resource and the access time, the preamble resource and the frequency-domain resources, and the preamble resource and the time-frequency resources is selected for random access according to the preset manner, so that the problem of random access resource insufficiency in the related technology may be solved, an access delay of the UE is further effectively reduced, the requirements for resources are reduced, and meanwhile, the probability of collision is lowered.

In an exemplary embodiment, in Step S102, that the PRACH resource is selected according to the preset manner may include, but not limited to, at least one of manners:

the first manner: the PRACH resource is calculated according to identification information of the UE; and

the second manner: the PRACH resource allocated by network-side equipment to the UE is selected.

In an exemplary embodiment, in the second manner, the PRACH resource allocated by the network-side equipment to the UE may be selected according to RRC signaling or physical-layer signaling received from the network-side equipment.

In an exemplary embodiment, before the RPACH resource is selected according to the preset manner in Step S102, the following stepsS1 to S5 may further be included.

At Step S1: a notification message sent by the network-side equipment is received, and the notification message indicates at least one of: an available preamble resource of a local cell, an available time-domain resource of the local cell, an available frequency-domain resource of the local cell and a time-domain resource period of the local cell.

In an exemplary embodiment, before the PRACH resource is selected according to the preset manner in Step S102, the following operation may further be included.

At Step S2: a resource information set in a predefined bundling manner is acquired, and the resource information set may include at least one of: an available preamble resource of a local cell, an available time-domain resource of the local cell, an available frequency-domain resource of the local cell and a time-domain resource period of the local cell.

In an exemplary embodiment, in Step S102, under the condition that the network-side equipment is an eNB and multiple available preamble root sequences exist in a cell where the eNB is located, each available preamble root sequence is bound with different subframes respectively.

In a preferred implementation process, a bundling manner for each available preamble root sequence and different subframes changes according to a preset pattern.

In the preferred implementation process, the access time change according to the preset pattern.

In an exemplary embodiment, in the first manner, after the PRACH resource is obtained by calculating the identification information, the following step may further be included.

At Step S3: if a conflict occurs in a process of performing access over the PRACH resource, it is determined that access is continued to be performed according to the calculated PRACH resource, or, it is determined that random access is performed on another time-frequency resource divided by the network-side equipment, and the other divided time-frequency resource is notified by the network-side equipment or predefined.

In an exemplary embodiment, the method may further include the following steps.

At Step S4: under the condition that access is completed after multiple access failures, an access condition is reported to the network-side equipment, and the access condition is configured for the network-side equipment to allocate a dedicated PRACH resource to the UE.

In an exemplary embodiment, in the first manner, that the PRACH resource is obtained by calculating the identification information may include the following step.

At Step S5: a PRACH resource set is selected, and the PRACH resource is calculated in the PRACH resource set according to the identification information.

In an exemplary embodiment, that access is performed by adopting the PRACH resource in Step S104 may include, but not limited to, one of the following manners.

The first manner: after an available preamble number is obtained by calculating the identification information, random access is performed by adopting a preamble resource corresponding to the available preamble number.

The second manner: after the available preamble number and the one or more access time are obtained by calculating the identification information, random access is performed at the one or more access time by adopting the preamble resource corresponding to the available preamble number.

The third manner: after the available preamble number and the one or more frequency-domain resources are obtained by calculating the identification information, random access is performed over the one or more frequency-domain resources by adopting the preamble resource corresponding to the available preamble number.

The fourth manner: after the available preamble number and one or more time-domain resources are obtained by calculating the identification information, random access is performed over the one or more time-domain resources by adopting the preamble resource corresponding to the available preamble number.

The fifth manner: random access is performed by adopting the PRACH resource allocated by the network-side equipment to the UE.

The preferred implementation process will be further described below with reference to the following embodiments.

Embodiment one

When being required to initiate random access, UE does not randomly select one of optional preambles, but selects a PRACH resource according to own UE identification information or a future UE_ID instead, and the UE_ID may include, but not limited to, one of:

(1) an International Mobile Subscriber Identity (IMSI),
(2) a System Architecture Evolution (SAE)-Temporary Mobile Subscriber Identity (S-TMSI),
(3) an International Mobile Equipment Identity (IMEI),

(4) a Cell Radio Network Temporary Identifier (C-RNTI) and

(5) an equipment Identity (ID) which may be allocated to MTC UE in the future.

It is important note that the UE_ID is not limited to the forms provided above in a practical application process.

The PRACH resource of the UE may be a function of the UE_ID:

$$n_{PRACH} = f\big(UE\_ID\big),$$

where $n_{PRACH}$ is a PRACH resource number of the UE, $f(\,)$ is a corresponding function of the UE_ID and the PRACH resource of the UE, and the PRACH resource may include, but not limited to, one of:

(1) a preamble resource;
(2) a preamble resource + access time;
(3) a preamble resource + frequency-domain resource; and
(4) a preamble resource + time-frequency resource.

The preamble resource may be a preamble sequence corresponding to a specific cyclic shift of a specific root sequence in an LTE system, for example: a preamble sequence corresponding to a cyclic shift 13 of a physical root sequence 3. Here, the root sequence may be a logical root sequence, and may also be a physical root sequence, and there are no limits made to a type of the root sequence. Of course, a newly defined sequence may also be adopted without limits of a preamble form in existing LTE.

Detailed descriptions will be made below for conditions corresponding to the four resources respectively.

In the above PRACH resource (1), the UE may calculate a preamble number according to own UE_ID and then perform random access according to a preamble corresponding to the calculated preamble number. There are no limits made to a time-frequency resource for access of the UE. For example, an available time-frequency resource notified by an eNB is randomly selected. A preamble resource calculation example will be listed below:

$$n_{preamble} = UE\_ID \bmod N_{preamble},$$

where mod represents a modulo operation, and $N_{preamble}$ is a total preamble number. For example: if the UE_ID is 35923 and $N_{preamble}$ =6,400, then $n_{preamble}$ =3923, that is, the UE corresponds to a preamble resource numbered to be #3923. Or, a hash function may also be adopted, for example:

$$n_{preamble} = \left(\frac{A \times UE\_IE}{D}\right) \bmod N_{preamble},$$

where A and D are two different big primes, may be predefined, and may also be notified by the eNB. Adoption of formulae may not be limited to the abovementioned formulae in the practical application process.

Before the above operation is executed, the eNB is required to notify available preamble resource information of a local cell, and/or, available time-domain resource information of the local cell, and/or, available frequency-domain resource information of the local cell through RRC signaling (for example, notifying in a System Information Block (SIB)). For example: information such as a root sequence and cyclic shift size of an available preamble resource and time-frequency resource information of the local cell are notified. Of course, the signaling notification method may also not be adopted, and instead, the available preamble resource of the local cell, and/or, an available time-domain resource of the local cell, and/or a frequency-domain resource of the local cell may be preset or predefined. For example, the root sequence of the available preamble resource and/or available time-domain resource and/or available frequency-domain resource of the local cell has a certain binding relationship with a cell ID, and the cyclic shift size is preset.

In the preferred implementation process, under the condition that the cell has many available preamble root sequences, for reducing detection complexity of the eNB and interference between the sequences and reducing a false alarm probability, subframes and the root sequences are bound. That is, when being required to perform random access, the UE is required to perform sending on a subframe corresponding to its preamble root sequence. For example, there are 10 available root sequences which are numbered to be 0~9 respectively and correspond to subframes 0~9 respectively, and a subframe of the root sequence 4 may be sent on the subframe 4 only. In order to randomize an access delay of the UE more, a bundling manner may change by adopting a certain pattern. For example, root sequences numbered to be 0~9 correspond to subframes numbered to be 0~9 in even subframes, and root sequences numbered to be 0~9 correspond to subframes numbered to be 0~9 in odd subframes.

In the above PRACH resource (2), the UE may calculate the preamble number and the access moment according to own UE_ID and then perform access at the calculated access moment according to the preamble corresponding to the calculated preamble number. There are no limits made to a frequency-domain resource adopted by the UE. For example, an available frequency-domain resource notified by the eNB is randomly selected. An example will be listed below, the preamble number of the UE is:

$$n_{preamble} = UE\_ID \bmod N_{preamble} ;$$

or

$$n_{preamble} = \left( \frac{A \times UE\_IE}{D} \right) \bmod N_{preamble} ;$$

the access time for the UE is:

$$\left( SFN \times 10 + n_{subframe} \right) \bmod T = \left( \left( UE\_ID - n_{preamble} \right) / N_{preamble} \right) \bmod T ,$$

or

$$\left( SFN \times 10 + n_{subframe} \right) \bmod T = \left( \left( A \cdot \left( UE\_ID - n_{preamble} \right) \bmod D \right) / N_{preamble} \right) \bmod T ;$$

where SFN is a system frame number, $n_{subframe}$ is a subframe number, A and D are two different big primes, and T is a time-domain resource period, and is predefined or notified by the eNB. Adoption of formulae may not be limited to the abovementioned formulae in the practical application process. For example: if the UE_ID is 35923, $N_{preamble}$ =64 and T=200ms, then the preamble number 19 of the UE may be obtained by adopting the formula:

$$n_{preamble} = UE\_ID \bmod N_{preamble} .$$

A subframe, of which an access moment is $(SFN \times 10 + n_{subframe}) \bmod 200 = 161$, of the UE may be obtained by adopting the formula $(SFN \times 10 + n_{subframe}) \bmod T = ((UE\_ID - n_{preamble}) / N_{preamble}) \bmod T,$ for example: a #1 subframe with SFN=16, a 1# subframe with SFN=36 and a #1 subframe with SFN=56.

In the preferred implementation process, in order to increase an access success rate of the UE and reduce the delay, the UE corresponds to multiple access moments in a time-domain resource period through a definition formula.

Before the above operation is executed, the eNB is required to notify the available preamble resource information of the local cell, and/or, the available time-domain resource information of the local cell, and/or, the available frequency-domain resource information of the local cell through the RRC signaling (for example, notifying in an SIB). For example: the information such as the root sequence and cyclic shift size of the available preamble resource and time-frequency resource information of the local cell are notified. Of course, the signaling notification method may also not be adopted, and instead, the available preamble resource of the local cell, and/or, the available time-domain resource of the local cell, and/or the frequency-domain resource of the local cell may be preset or predefined. For example, the root sequence of the available preamble resource and/or available time-domain resource and/or available frequency-domain resource of the local cell has a certain binding relationship with the cell ID, and the cyclic shift size is preset. T is notified by the eNB or predefined.

In the preferred implementation process, in order to randomize the access delay of the UE more, the access moment of the UE may change by adopting a certain pattern. For example:

under the condition that $(SFN \times 10 + n_{subframe})$mod $T$ is an even number, the following formula may be adopted:

$$\left(SFN \times 10 + n_{subframe}\right) \bmod T = \left(\left(UE\_ID - n_{preamble}\right)\middle/ N_{preamble}\right) \bmod T,$$

and

under the condition that $(SFN \times 10 + n_{subframe})$mod $T$ is an odd number, the following formula may be adopted:

$$\left(SFN \times 10 + n_{subframe}\right) \bmod T = T - \left(\left(UE\_ID - n_{preamble}\right)\middle/ N_{preamble}\right) \bmod T.$$

Adoption of formulae may not be limited to the abovementioned formulae in the practical application process.

In addition, under the condition that the cell has many available preamble root sequences, for reducing the detection complexity of the eNB and interference between the sequences and reducing the false alarm probability, subframes and the root sequences may be bound, which will not be elaborated herein.

In the above PRACH resource (3), the UE may calculate the preamble number and the frequency-domain resource according to own UE_ID and then perform access over the calculated frequency-domain resource according to the preamble corresponding to the calculated preamble number. There are no limits made to a time resource adopted by the UE. For example, an available time resource notified by the eNB is randomly selected. An example will be listed below, the preamble number of the UE is:

$$n_{preamble} = UE\_ID \bmod N_{preamble},$$

or

$$n_{preamble} = \left(\frac{A \times UE\_IE}{D}\right) \bmod N_{preamble},$$

and

an access frequency-domain resource index of the UE is:

$$f = \left(\left(UE\_ID - n_{preamble}\right)\middle/ N_{preamble}\right) \bmod F,$$

or

$$f = \left(\left(A \cdot \left(UE\_ID - n_{preamble}\right) \bmod D\right)\middle/ N_{preamble}\right) \bmod F,$$

where f is a frequency-domain resource number, and F is a total frequency-domain resource number, and is predefined or notified by the eNB. Adoption of formulae may not be limited to the abovementioned formulae in the practical application process. In the preferred embodiment, in order to increase the access success rate of the UE and reduce the delay, the UE may correspond to multiple access frequency-domain resources through a definition formula.

Before the above operation is executed, the eNB is required to notify the available preamble resource information of the local cell, and/or, the available time-domain resource information of the local cell, and/or, the available frequency-domain resource information of the local cell through the RRC signaling (for example, notifying in the SIB). For example: the information such as the root sequence and cyclic shift size of the available preamble resource and time-frequency resource information of the local cell are notified. Of course, the signaling notification method may also not be adopted, and instead, the available preamble resource of the local cell, and/or, the available time-domain resource of the local cell, and/or the frequency-domain resource of the local cell may be preset or predefined. For example, the root sequence of the available preamble resource and/or available time-domain resource and/or available frequency-domain resource of the local cell has a certain binding relationship with the cell ID, and the cyclic shift size is preset. T is notified by the eNB or predefined.

In the preferred implementation process, under the condition that the cell has many available preamble root sequences, for reducing the detection complexity of the eNB and interference between the sequences and reducing the false alarm probability, subframes and the root sequences may be bound, which will not be elaborated herein.

In the above PRACH resource (4), the UE may calculate the preamble number and the access time-frequency resource according to own UE_ID and then perform access on the calculated time-frequency resource according to the preamble corresponding to the calculated preamble number. An example will be listed below, the preamble number of the UE is:

$$n_{preamble} \ = \ UE\_ID \bmod N_{preamble} \, ,$$

or

$$n_{preamble} \ = \ \left( \frac{A \times UE\_IE}{D} \right) \bmod N_{preamble} \, ,$$

and

an access time-frequency resource index of the UE is:

$$r \ = \ \left( \left( UE\_ID - n_{preamble} \right) \middle/ N_{preamble} \right) \bmod R \, ,$$

or

$$r \ = \ \left( \left( A \cdot \left( UE\_ID - n_{preamble} \right) \bmod D \right) \middle/ N_{preamble} \right) \bmod R$$

where r is a time-frequency resource number, F is a total time-frequency resource number in a time-frequency resource period, and A and D are two different big primes respectively, and are predefined or notified by the eNB. Adoption of formulae may not be limited to the abovementioned formulae in the practical application process. In the preferred embodiment, in order to increase the access success rate of the UE and reduce the delay, the UE may correspond to multiple access time-frequency resources in a resource period through a definition formula.

Before the above operation is executed, the eNB is required to notify the available preamble resource information of the local cell, and/or, the available time-domain resource information of the local cell, and/or, the available frequency-domain resource information of the local cell through the RRC signaling (for example, notifying in the SIB). For example: the information such as the root sequence and cyclic shift size of the available preamble resource and time-frequency resource information of the local cell are notified. Of course, the signaling notification method may also not be adopted, and instead, the available preamble resource of the local cell, and/or, the available time-domain resource of the local cell, and/or the frequency-domain resource of the local cell may be preset or predefined. For example, the root sequence of the available preamble resource and/or available time-domain resource and/or available frequency-domain resource of the local cell has a certain binding relationship with the cell ID, and the cyclic shift size is preset. R is notified by the eNB or predefined, or is calculated through some predefined parameters, for example, a result obtained by performing a product operation on the time-domain resource period and the total frequency-domain resource number.

In the preferred implementation process, in order to randomize the access delay of the UE more, the access moment of the UE may change by adopting a certain pattern, which is similar to the abovementioned condition and will not be elaborated herein.

Under the condition that the cell has many available preamble root sequences, for reducing the detection complexity of the eNB and interference between the sequences and reducing the false alarm probability, subframes and the root sequences may be bound, which will also not be elaborated herein.

In the preferred implementation process, in order to meet different access delay level or collision probability requirements and the like of UE, different UE is classified for access. Multiple PRACH resource sets exist in the system, the UE selects a PRACH resource set according to own information such as a UE type or a service type, and calculates a PRACH resource for access on the PRACH resource set according to own ID, different PRACH resource sets correspond to different resource calculation formulae, and formula parameters are predefined or notified by the eNB. Fig. 2 is a schematic diagram of classified access of UE according to a preferred embodiment of the present disclosure. As shown in Fig. 2, there are three PRACH resource sets, and a slash area and an upright slash area represent different resource periods respectively. The three PRACH resource set have different frequency-domain resources, and are represented as a PRACH resource set #1, a PRACH resource set #2 and a PRACH resource set #3 from top to bottom respectively, and corresponding delay requirements are lowered from top to bottom. The UE selects the PRACH resource set according to own delay requirement, calculates a PRACH resource, and then performs access. In order to increase access opportunities of UE with a high delay requirement and further reduce a delay, the UE with the high delay requirement may also calculate PRACH resources on the multiple resource sets for access. For example, if certain UE has a very high delay requirement, it may calculate PRACH resources in the three sets and then perform access on any calculated resource.

In order to further increase an access success probability of the UE with the high delay requirement, the UE with the high delay requirement may perform sending on another time-frequency resource allocated to UE with a low delay requirement.

When the UE selects the PRACH resource for access according to the abovementioned manner, if a collision occurs, the following manners may be adopted.

(1) The UE still performs access over the PRACH resource calculated according to the UE_ID; or,
(2) another time-frequency resource is divided to the conflicting UE for random access: when the conflict occurs, the UE automatically calculates a PRACH resource on another time-frequency resource for access according to a similar formula, or, randomly selects a preamble for access according to a conventional art, the time-frequency resource being notified by the eNB or predefined.

After the UE accesses after multiple access failures, the condition is reported to the eNB, for example: a failure number, or 1 bit information is reported after a certain number of access times is exceeded, and the eNB allocates a dedicated PRACH resource to the UE after receiving the information reported by the UE.

Embodiment two

UE reports own UE type, a business type or the like, for example: an access delay, access period and the like allowed by the UE.

An eNB may allocate a PRACH resource adopted for subsequent access to the UE according to the UE type, service type or the like reported by the UE, and notify the PRACH resource through RRC signaling or physical-layer signaling (for example: Downlink Control Information (DCI) or new physical-layer signaling), and the PRACH resource may include, but not limited to, one of:

(1) a preamble resource;
(2) a preamble resource + access moment;
(3) a preamble resource + frequency-domain resource; and
(4) a preamble resource + time-frequency resource.

The preamble resource may not be limited to preamble forms in existing LTE, and may be a newly defined sequence.

Then, when being required to access, the UE performs random access by adopting the allocated PRACH resource.

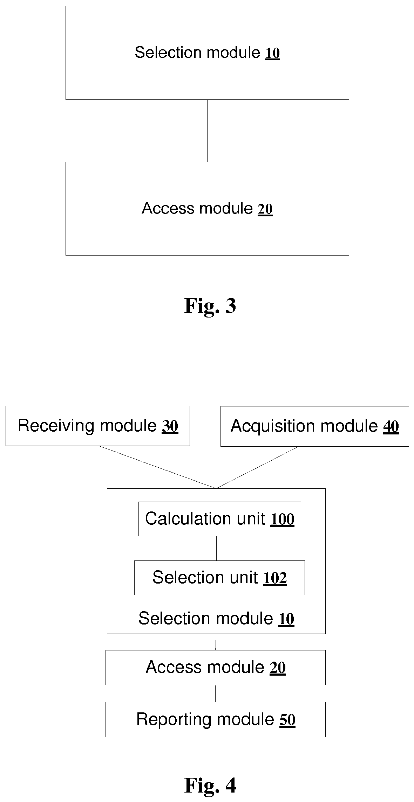

Fig. 3 is a structure block diagram of an access device for UE according to an embodiment of the present disclosure. As shown in Fig. 3, the access device for the UE may include: a selection module 10, configured to select a PRACH resource according to a preset manner, and the PRACH resource is one of: a preamble resource, the preamble resource and one or more access time, the preamble resource and one or more frequency-domain resources, and the preamble and one or more time-frequency resources; and an access module 20, configured to perform access by adopting the PRACH resource.

By adopting the device shown in Fig. 3, the problem that there is no solution applicable to massive UE access in the related technology is solved, an access delay of the UE is further effectively reduced, the requirements for resources are reduced, and meanwhile, the probability of collision is lowered.

In an exemplary embodiment, as shown in Fig. 4, the selection module 10 may include: a calculation unit 100, configured to calculate the PRACH resource according to identification information of the UE; and a selection unit 102, configured to select the PRACH resource allocated by network-side equipment to the UE.

In an exemplary embodiment, the selection unit 102 is configured to select the PRACH resource allocated by the network-side equipment to the UE according to RRC signaling or physical-layer signaling received from the network-side equipment.

In an exemplary embodiment, as shown in Fig. 4, the device may further include: a receiving module 30, configured to receive a notification message sent by the network-side equipment, and the notification message indicates at least one of: an available preamble resource of a local cell, an available time-domain resource of the local cell, an available frequency-domain resource of the local cell and a time-domain resource period of the local cell.

In an exemplary embodiment, as shown in Fig. 4, the device may further include: an acquisition module 40, configured to acquire a resource information set in a predefined bundling manner, and the resource information set includes at least one of: an available preamble resource of a local cell, an available time-domain resource of the local cell, an available frequency-domain resource of the local cell and a time-domain resource period of the local cell.

In an exemplary embodiment, the calculation unit 100 is configured to, under the condition that the network-side equipment is an eNB and multiple available preamble root sequences exist in a cell where the eNB is located, bundling each available preamble root sequence with different subframes respectively.

In a preferred implementation process, a bundling manner for each available preamble root sequence and different subframes changes according to a preset pattern.

In the preferred implementation process, the access time change according to the preset pattern.

In an exemplary embodiment, the access module 20 is configured to, if a conflict occurs in a process of performing access over the PRACH resource, determine to continue performing access over the PRACH resource obtained by calculation, or, determine to perform random access on another time-frequency resource divided by the network-side equipment, and the other divided time-frequency resource is notified by the network-side equipment or predefined.

In an exemplary embodiment, as shown in Fig. 4, the device may further include: a reporting module 50, configured to, under the condition that access is completed after multiple access failures, report an access condition to the network-side equipment, and the access condition is configured for the network-side equipment to allocate a dedicated PRACH resource to the UE.

In an exemplary embodiment, the calculation unit 100 is configured to select a PRACH resource set, and calculate the PRACH resource in the PRACH resource set according to the identification information.

In an exemplary embodiment, the access module 20 is configured to perform access by adopting the PRACH resource, including, but not limited to, one of the following manners:

a first manner: after an available preamble number is obtained by calculating the identification information, random access is performed by adopting a preamble resource corresponding to the available preamble number;

a second manner: after the available preamble number and the one or more access time are obtained by calculating the identification information, random access is performed at the one or more access time by adopting the preamble resource corresponding to the available preamble number;

a third manner: after the available preamble number and the one or more frequency-domain resources are obtained by calculating the identification information, random access is performed over the one or more frequency-domain resources by adopting the preamble resource corresponding to the available preamble number;

a fourth manner: after the available preamble number and one or more time-domain resources are obtained by calculating the identification information, random access is performed over the one or more time-domain resources by adopting the preamble resource corresponding to the available preamble number; and

a fifth manner: random access is performed by adopting the PRACH resource allocated by the network-side equipment to the UE.

From the above descriptions, it can be seen that the embodiments achieve the following technical effects (it is important to note that these effects are effects which may be achieved by some preferred embodiments): by adopting the technical solutions provided by the embodiments of the present disclosure, the problem of random access resource insufficiency in the related technology may be solved, so that the access delay of the UE is further effectively reduced, the requirement of the system over the resource is reduced, and meanwhile, the collision probability is lowered.

Obviously, those skilled in the art should know that each module or each step of the present disclosure may be implemented by a universal computing device, and the modules or steps may be concentrated on a single computing device or distributed on a network formed by a plurality of computing devices, and may optionally be implemented by program codes executable for the computing devices, so that the modules or steps may be stored in a storage device for execution with the computing devices, the shown or described steps may be executed in sequences different from those described here in some circumstances, or may form each integrated circuit module respectively, or multiple modules or steps therein may form a single integrated circuit module for implementation. As a consequence, the present disclosure is not limited to any specific hardware and software combination.

The above is only the preferred embodiment of the present disclosure and not intended to limit the present disclosure. For those skilled in the art, the present disclosure may have various modifications and variations. Any modifications, equivalent replacements, improvements and the like made within the principle of the present disclosure shall fall within the scope of protection of the present disclosure.

**Industrial Applicability**

As mentioned above, the access method and device for the UE provided by the embodiments of the present disclosure have the following beneficial effects: the pressure of random access resource insufficiency in the related technology may be effectively alleviated, the access delay of the UE may be reduced, the requirement of the system on the resource may be reduced, and meanwhile, the probability of collision is lowered.

**Claims**

1. An access method for User Equipment, UE, comprising:

   selecting a Physical Random Access Channel, PRACH, resource according to a preset manner, wherein the PRACH resource is one of: a preamble resource, a preamble resource and one or more access time, a preamble resource and one or more frequency-domain resources, and a preamble resource and one or more time-frequency resources; and
   performing access by adopting the PRACH resource.

2. The method according to claim 1, wherein selecting the PRACH resource according to the preset manner comprises at least one of the following steps:

   calculating the PRACH resource according to identification information of the UE; and
   selecting the PRACH resource allocated by network-side equipment to the UE.

3. The method according to claim 2, wherein the PRACH resource allocated by the network-side equipment to the UE is selected according to Radio Resource Control, RRC, signaling or physical-layer signaling received from the network-side equipment.

4. The method according to claim 1, before selecting the RPACH resource according to the preset manner, further comprising:

   receiving a notification message sent by the network-side equipment, wherein the notification message indicates at least one of: an available preamble resource of a local cell, an available time-domain resource of the local cell, an available frequency-domain resource of the local cell and a time-domain resource period of the local cell.

5. The method according to claim 1, before selecting the PRACH resource according to the preset manner, further comprising:

   acquiring a resource information set in a predefined bundling manner, wherein the resource information set comprises at least one of: an available preamble resource of a local cell, an available time-domain resource of the local cell, an available frequency-domain resource of the local cell and a time-domain resource period of the local cell.

6. The method according to claim 1, wherein, under the condition that the network-side equipment is an Evolved NodeB, eNB, and multiple available preamble root sequences exist in a cell where the eNB is located, each available preamble root sequence is bound with different subframes respectively.

7. The method according to claim 6, wherein a bundling manner for each available preamble root sequence and different subframes changes according to a preset pattern.

8. The method according to claim 1, wherein the access time change according to the preset pattern.

9. The method according to claim 2, after calculating the PRACH resource according to the identification information, further comprising:

if a conflict occurs in a process of performing access over the PRACH resource, then determining to continue performing access over the PRACH resource obtained by calculation, or, determining to perform random access on another time-frequency resource divided by the network-side equipment, wherein the other divided time-frequency resource is notified by the network-side equipment or is predefined.

10. The method according to claim 2, further comprising: under the condition that access is completed after multiple access failures, reporting an access condition to the network-side equipment, and the network-side equipment allocates a dedicated PRACH resource to the UE according to the access condition.

11. The method according to claim 2, wherein calculating the PRACH resource according to the identification information comprises:

selecting a PRACH resource set, and calculating the PRACH resource within the PRACH resource set according to the identification information.

12. The method according to claim 2, wherein performing access by adopting the PRACH resource comprises one of the following:

after an available preamble number is obtained by calculating the identification information, performing random access by adopting a preamble resource corresponding to the available preamble number;
after the available preamble number and the one or more access time are obtained by calculating the identification information, performing random access at the one or more access time by adopting the preamble resource corresponding to the available preamble number;
after the available preamble number and the one or more frequency-domain resources are obtained by calculating the identification information, performing random access over the one or more frequency-domain resources by adopting the preamble resource corresponding to the available preamble number;
after the available preamble number and one or more time-domain resources are obtained by calculating the identification information, performing random access over the one or more time-domain resources by adopting the preamble resource corresponding to the available preamble number; and
performing random access by adopting the PRACH resource allocated by the network-side equipment to the UE.

13. An access device for User Equipment, ,UE, comprising:

a selection module, configured to select a Physical Random Access Channel, PRACH, resource according to a preset manner, wherein the PRACH resource is one of: a preamble resource, a preamble resource and one or more access time, a preamble resource and one or more frequency-domain resources, and a preamble and one or more time-frequency resources; and
an access module, configured to perform access by adopting the PRACH resource.

14. The device according to claim 13, wherein the selection module comprises:

a calculation unit, configured to calculate the PRACH resource according to identification information of the UE; and
a selection unit, configured to select the PRACH resource allocated by network-side equipment to the UE.

15. The device according to claim 14, wherein the selection unit is configured to select the PRACH resource allocated by the network-side equipment to the UE according to Radio Resource Control, RRC, signaling or physical-layer signaling received from the network-side equipment.

16. The device according to claim 13, further comprising:

a receiving module, configured to receive a notification message sent by the network-side equipment, wherein the notification message indicates at least one of: an available preamble resource of a local cell, an available time-domain resource of the local cell, an available frequency-domain resource of the local cell and a time-domain resource period of the local cell.

**17.** The device according to claim 13, further comprising:

an acquisition module, configured to acquire a resource information set in a predefined bundling manner, wherein the resource information set comprises at least one of: an available preamble resource of a local cell, an available time-domain resource of the local cell, an available frequency-domain resource of the local cell and a time-domain resource period of the local cell.

**18.** The device according to claim 13, wherein the calculation unit is configured to, under the condition that the network-side equipment is an Evolved NodeB, eNB, and multiple available preamble root sequences exist in a cell where the eNB is located, bundling each available preamble root sequence with different subframes respectively.

**19.** The device according to claim 18, wherein a bundling manner for each available preamble root sequence and different subframes changes according to a preset pattern.

**20.** The device according to claim 13, wherein the access time change according to the preset pattern.

**21.** The device according to claim 14, wherein the access module is configured to, if a conflict occurs in a process of performing access over the PRACH resource, then determine to continue performing access over the PRACH resource obtained by calculation, or, determine to perform random access on another time-frequency resource divided by the network-side equipment, wherein the other divided time-frequency resource is notified by the network-side equipment or is predefined.

**22.** The device according to claim 14, further comprising:

a reporting module, configured to, under the condition that access is completed after multiple access failures, report an access condition to the network-side equipment, and the network-side equipment allocates a dedicated PRACH resource to the UE according to the access condition.

**23.** The device according to claim 14, wherein the calculation unit is configured to select a PRACH resource set, and calculate the PRACH resource within the PRACH resource set according to the identification information.

**24.** The device according to claim 14, wherein the access module is configured to perform access by adopting the PRACH resource, comprising one of following:

after an available preamble number is obtained by calculating the identification information, random access is performed by adopting a preamble resource corresponding to the available preamble number;
after the available preamble number and the one or more access time are obtained by calculating the identification information, random access is performed at the one or more access time by adopting the preamble resource corresponding to the available preamble number;
after the available preamble number and the one or more frequency-domain resources are obtained by calculating the identification information, random access is performed over the one or more frequency-domain resources by adopting the preamble resource corresponding to the available preamble number;
after the available preamble number and one or more time-domain resources are obtained by calculating the identification information, random access is performed over the one or more time-domain resources by adopting the preamble resource corresponding to the available preamble number; and
a random access is performed by adopting the PRACH resource allocated by the network-side equipment to the UE.

A PRACH resource is selected according to a preset manner, wherein the PRACH resource is one of: a preamble resource, a preamble resource and one or more access time, a preamble resource and one or more frequency-domain resources, and a preamble and one or more time-frequency resources ⌐S102

An access is performed by adopting the PRACH resource ⌐S104

**Fig. 1**

**Fig. 2**

Selection module **10**

Access module **20**

**Fig. 3**

Receiving module **30**      Acquisition module **40**

Calculation unit **100**

Selection unit **102**

Selection module **10**

Access module **20**

Reporting module **50**

**Fig. 4**

# INTERNATIONAL SEARCH REPORT

| International application No. |
|---|
| **PCT/CN2015/074636** |

## A. CLASSIFICATION OF SUBJECT MATTER

H04W 74/08 (2009.01) i: H04W 72/02 (2009.01) i

According to International Patent Classification (IPC) or to both national classification and IPC

## B. FIELDS SEARCHED

Minimum documentation searched (classification system followed by classification symbols)

H04W, H04Q, H04L

Documentation searched other than minimum documentation to the extent that such documents are included in the fields searched

Electronic data base consulted during the international search (name of data base and, where practicable, search terms used)

CPRSABS, CNTXT, CNKI, VEN: time domain, frequency domain, time frequency, physical w radom w access w channel, PRACH, resource?, preamble, time, frequency, allocat+, assign+, distribut+, select+, choos+, determin+, calculat+, inform+, notify+

## C. DOCUMENTS CONSIDERED TO BE RELEVANT

| Category* | Citation of document, with indication, where appropriate, of the relevant passages | Relevant to claim No. |
|---|---|---|
| X | CN 102014514 A (DATANG MOBILE COMMUNICATIONS EQUIPMENT CO., LTD.), 13 April 2011 (13.04.2011), description, paragraphs [0070]-[0152] | 1-10, 13-22 |
| A | CN 102014514 A (DATANG MOBILE COMMUNICATIONS EQUIPMENT CO., LTD.), 13 April 2011 (13.04.2011), the whole document | 11-12, 23-24 |
| X | CN 103959878 A (HUAWEI TECHNOLOGIES CO., LTD.), 30 July 2014 (30.07.2014), description, paragraphs [0175]-[0185] | 1-10, 13-22 |
| A | CN 103959878 A (HUAWEI TECHNOLOGIES CO., LTD.), 30 July 2014 (30.07.2014), the whole document | 11-12, 23-24 |
| X | CN 101483919 A (HUAWEI TECHNOLOGIES CO., LTD.), 15 July 2009 (15.07.2009), description, page 4, line 3 to page 5, line 3 | 1-10, 13-22 |
| A | CN 101483919 A (HUAWEI TECHNOLOGIES CO., LTD.), 15 July 2009 (15.07.2009), the whole document | 11-12, 23-24 |
| X | EP 2733874 A2 (LG ELECTRONICS INC.), 21 May 2014 (21.05.2014), description, paragraphs [0082]-[0107] | 1-10, 13-22 |

☒ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 May 2015 (23.05.2015) | **01 July 2015 (01.07.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **HUANG, Haofu** Telephone No.: (86-10) **62411436** |

Form PCT/ISA/210 (second sheet) (July 2009)

## INTERNATIONAL SEARCH REPORT

| International application No. |
| --- |
| **PCT/CN2015/074636** |

**C (Continuation).** DOCUMENTS CONSIDERED TO BE RELEVANT

| Category* | Citation of document, with indication, where appropriate, of the relevant passages | Relevant to claim No. |
| --- | --- | --- |
| A | EP 2733874 A2 (LG ELECTRONICS INC.), 21 May 2014 (21.05.2014), the whole document | 11-12, 23-24 |
| X | WO 2014110772 A1 (FUJITSU LTD.), 24 July 2014 (24.07.2014), description, page 5, line 17 to page 8, line 4 | 1-10, 13-22 |
| A | WO 2014110772 A1 (FUJITSU LTD.), 24 July 2014 (24.07.2014), the whole document | 11-12, 23-24 |

Form PCT/ISA/210 (continuation of second sheet) (July 2009)

**INTERNATIONAL SEARCH REPORT**

Information on patent family members

| International application No. |
| --- |
| **PCT/CN2015/074636** |

| Patent Documents referred in the Report | Publication Date | Patent Family | Publication Date |
| --- | --- | --- | --- |
| CN 102014514 A | 13 April 2011 | US 2012243448 A1 | 27 September 2012 |
| | | KR 20120091351 A | 17 August 2012 |
| | | EP 2501196 B1 | 22 April 2015 |
| | | CN 102014514 B | 15 January 2014 |
| | | KR 101480419 B1 | 12 January 2015 |
| | | EP 2501196 A1 | 19 September 2012 |
| | | EP 2501196 A4 | 10 April 2013 |
| | | WO 2011057470 A1 | 19 May 2011 |
| CN 103959878 A | 30 July 2014 | WO 2015042829 A1 | 02 April 2015 |
| CN 101483919 A | 15 July 2009 | None | |
| EP 2733874 A2 | 21 May 2014 | EP 2733874 A4 | 18 March 2015 |
| | | WO 2013009068 A3 | 14 March 2013 |
| | | KR 20140044361 A | 14 April 2014 |
| | | WO 2013009068 A2 | 17 January 2013 |
| | | US 2014198748 A1 | 17 July 2014 |
| WO 2014110772 A1 | 24 July 2014 | None | |

Form PCT/ISA/210 (patent family annex) (July 2009)